(19) Europäisches Patentamt
European Patent Office
Office européen des brevets

(11) **EP 3 145 282 A1**

(12) **EUROPEAN PATENT APPLICATION**
published in accordance with Art. 153(4) EPC

(43) Date of publication:
**22.03.2017 Bulletin 2017/12**

(51) Int Cl.:
**H05B 41/14** (2006.01)  **H02M 7/02** (2006.01)

(21) Application number: **15776962.1**

(22) Date of filing: **31.03.2015**

(86) International application number:
**PCT/ES2015/070247**

(87) International publication number:
**WO 2015/155393 (15.10.2015 Gazette 2015/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **07.04.2014 ES 201430514**

(71) Applicant: **Airis Technology Solutions, S.L.
28045 Madrid (ES)**

(72) Inventors:
• **MONTORO IRADIER, Agustin
E-28045 Madrid (ES)**
• **MOLERA PICAZO, Jose Vicente
E-28045 Madrid (ES)**

(74) Representative: **Molero Moraleda, Felipe et al
Paseo de la Castellana, 173 bajo izq.
28046 Madrid (ES)**

(54) **INTELLIGENT POWER SOURCE, CAPABLE OF DIGITAL COMMUNICATION VIA THE POWER LINE**

(57)  INTELLIGENT POWER SOURCE, CAPABLE OF DIGITAL COMMUNICATION VIA THE POWER LINE, suitable for powering LEDs (8) of lights, and formed by an electronic device having: an input unit (3) connected to the alternating current line (230 V); a power regulator (4); power transformers (5); and an output unit (6) to which the power supply line (7) for the LEDs (8) is connected. In addition, the intelligent power source comprises a CPU microprocessor (10) and a PLC modem (11) both disposed in a compact assembly and linked to the input unit (3) and to the power regulator (4), said CPU microprocessor (10) and PLC modem (11) being used to control the entire operation of the intelligent power source, namely start-up, power, synchronization, temperature, voltage and the other functions of the source (1), as well as protection, communications with other sources, and storage of parameters and data.

FIG. 1

**Description**

**OBJECT OF THE INVENTION**

The invention, as expressed in the title of the present specification, refers to an intelligent power source, capable of digital communication via the power line, which offers, for the function for which it is intended, various novel advantages and characteristics that will be described in more detail hereinafter, and which involve a substantial improvement compared to the currently known systems in the prior art for the same purpose.

More particularly, the object of the invention is centered on a power source, particularly intended for powering light emitting diodes LED luminaires, which, among other elements, includes the incorporation of a microprocessor integrated in said source which enables it to have a broad range of input and output voltages, frequencies and powers, as well as for receiving and transmitting information through the powerlines, so that it may store and transmit operating parameters (input and output voltage and current, hours of use, temperature) and in turn receive instructions for turning off, turning on and reducing or increasing output current, in order to maintain a low level of harmonics even when reducing the output current and voltage, in order to withstand input voltage peaks of at least 4 kV, and in order to offer an average efficiency of more than 90% even with the PLC communications consumption.

**FIELD OF APPLICATION OF THE INVENTION**

The field of application of the present invention is centered around the industry sector dedicated to the manufacture of electronic devices, centering in particular on the area of drives or controllers, power sources and communication sources between electronic devices, more particularly on power sources that supply the LEDs that comprise LED luminaires and which communicate with each other through the powerline.

**BACKGROUND OF THE INVENTION**

As is known, LED lighting devices require direct current to power them. Said devices are connected to alternating current, and therefore require a power source that converts the alternating current to direct current.

These power sources are electronic devices that receive the alternating signal and transform it to direct in order to power the LED lighting diodes.

Most of the sources are analog, have a small range output voltage and a fixed output current, and do not store their operating parameters, and in some cases have a (1-10 V) input, DALI or (PWM), which makes it possible to regulate the output current.

Some include a communication by powerline, but using two separate systems, whether internally or externally, which increases costs.

With reference to the prior art, then, although there are various types of power sources, as far as the applicant is concerned, knows of none that has technical, structural and constituent characteristics that are similar to the invention proposed here, the characterizing details of which are appropriately set forth in the final claims that accompany the present specification.

**DESCRIPTION**

Specifically, the invention proposes a power source which, especially intended to power the LEDs of a light, is specifically developed, in a first aspect, for the purpose of enabling it to receive and transmit information and orders through the powerline, in a second aspect, to enable it to store all of the source's operation information, and in a third aspect, to enable it to be a repeater of the information or instructions sent to a second source or auxiliary source connected to the same powerline. All of this is integrated in a single device with a microprocessor that manages all of the necessary functions, instead of using separate systems.

As a result of the foregoing, various technological advantages are achieved compared to the current LED lighting solution:

- Simplifying LED lighting installations and making them less expensive, since it is unnecessary to provide any wiring besides supplying the luminaries with alternating current.
- Improving the efficiency of the lighting installation, reducing or increasing the light flux when necessary.
- Improving adaptation to the installations' specific lighting needs, regulating the light flux when necessary.
- Maintaining the installation's level of harmonics and power factor stable, including when lowering the light flux.
- Withstanding high voltages in the powerline without being damaged.
- Succeeding in reducing the installations' cost of preventive and corrective maintenance by knowing if a device has failed, the cause of the failure, the hours of operation and operating temperature of each device.
- Succeeding in maintaining average efficiency of 90% in the source, including consumption from communications.
- Succeeding in lowering the cost of production of the source because with a single model with variable and programmable output range through the electric mains, an output range is obtained which makes it possible to cover 5-10 models of the present sources.

Going into further details of the invention, the composition of the proposed power source has the feature of having at least one microprocessor which controls all of its operation, protection, communications, auxiliary power sources and parameters and data storage.

Moreover, the power source optionally includes a second auxiliary power source integrated into the first or main one, which enables the LEDs illumination to be turned off, while maintaining the operation of communications and data retransmission for other sources.

Furthermore, according to another of the invention's characteristics, the proposed source is provided with fast diodes that allow it to be cut off when a high voltage pulse arrives, preventing damage or breakdown of the internal components.

According to another characteristic, it also has varistors that protect the source against voltage peaks of up to 4 kV.

Moreover, the power source of the invention has power transistors and diodes controlled by the microprocessor that turns them on using a mathematical formula that enables the harmonics and power factor to be maintained below the limit required by standard, even when the output current or voltage is lowered, as well as to maintain the output current at the required value.

It also has at least one high-frequency transformer, one diode and transistors that maintain the average efficiency at more than 90%, even when the source is communicating.

The power source also has an NTC resistance (*negative temperature coefficient*) which measures the source's temperature, and optionally an input to measure the LEDs' temperature.

The microprocessor controls the source as well as a transistor and a transformer and a circuit, with which it detects when the input voltage crosses through zero and cuts off the source for an instant to emit pulses at the alternating voltage input zero crossings, also enabling the source to communicate with other sources, since at that time there is no noise on the network and all of the sources are cut off at that time, reducing the generation of noise caused by the source itself.

The power source has an operating protocol which, even when the source is turned off (solution without emitting light), it listens for the information received by the powerline, interprets and re-transmits it if necessary.

The communication by powerline makes it possible to program the output current for each independent source after terminating the production of the source at more than 60 levels, which makes it possible to have a universal source for all of the applications.

Moreover, it includes a so-called dual level system which is configurable by PLC (*powerline communications*) and which includes significant advantages compared to standard dual level systems that may exist on the market.

A standard dual level system makes it possible to establish a fixed period of time during which the luminosity is reduced, typically at 50%, so that the luminosity when the light is turned on at dusk begins at 100%, is subsequently reduced to 50% during the hours in the middle of the night, and finally returns to 100% at dawn, prior to final turnoff.

Unlike a standard dual level, in the solution included in the proposed power source it is possible to define up to 8 time periods between turning on and turning off, assigning a specific luminosity and duration of time to each level, which is established as a % of the total time between the turn-on and turn-off of the previous day.

By establishing more periods and calculating them as a function of the on-time of the previous day, the solution makes it possible to adjust the variable duration of days throughout the year as well as the illumination needs of each facility, thus increasing the efficiency of the lighting installation. Moreover, by being configurable by PLC it can be adapted much more quickly to particular needs.

Another of the functions it can perform is that of being compatible with so-called "flux reducers."

A flux reducer is a system installed in the header boards of conventional lighting installations (incandescence, etc.) which enables the intensity of the illumination to be regulated by reducing the voltage and consequently the power applied to the lamps connected thereto.

The power sources for conventional LED diodes that are normally found on the market attempt to maintain the illumination intensity constant irrespective of the input voltage applied thereto. For this reason, they are incompatible with flux regulators.

Since flux regulators are currently in very extensive use in installations, it is important to offer a solution in which the power source is compatible with such regulators.

The proposed power source is suitable for flux regulators, enabling the luminous intensity to be gradually reduced after a certain minimum voltage (170 V), reducing the output current in proportion to the input voltage detected by the source.

Moreover, it has temperature protection, since the source is monitoring the internal temperature thereof, and optionally the temperature of the LEDs, and when it determines that said temperature is exceeded, it will lower the output power of the LEDs in order to maintain the temperature below the maximum operating level.

Finally, the source optionally has an input that allows connection to a simple external pushbutton to turn off or vary its output current an autonomous and programmable fashion.

It is important to emphasize that the fact that the CPU or microprocessor is what performs the calculation of the output current combined with the correction of harmonics is a novelty that is not included in currently existing power sources.

This is related to the description of the calculation of the wave function. Because we cut off the source in order to achieve optimal communication, this deforms the current's wave at the zero crossings, which requires special mathematical processing in order to comply with the standards of harmonics/wave deformation (EN-61000-3-2), which is what the calculation of said function resolves.

Said function, called $f(\theta) = sen(\theta) + \sum_{i=1}^{19} a_{2i+1} sen((2i+1)\theta)$ is the sum of the first 39 odd harmonics and standardized to 1 of the current consumed by the power source, as required by standard, as a function of the angle $\theta = \omega t$ of the input sinewave, taking, without thus losing any generality, the first harmonic as amplitude equal to 1 and leaving the other 38 amplitudes as unknowns to be solved.

From the zero crossing of the input voltage sinewave to the time at which the CPU again activates the power source, an angle $\theta_c$ or conduction angle takes place, which enables the required information to be transmitted through the powerline without noise.

The condition or restriction that allows us to calculate the coefficients $a_{2i+1}$ is that the function $f(\theta)$, i.e. the current, is zero (or its absolute value is as close to zero as possible) in a time interval (or angle) between $\theta = 0$ and $\theta = \theta_c$, and that each of the coefficients $a_{2i+1}$ is less than the limit established by standard, i.e. $a_3 < 30\%$ $pf$, $a_5 < 10\%$, $a_7 < 7\%$, $a_9 < 5\%$ and $a_{11,13,...,39} < 3\%$, pf being the power factor.

The function to minimize to the most suitable absolute value is $\int_0^{\theta_c} f^2(\theta)d\theta$. This integral is achievable, although it is too large to put here (it has 39 X 39 = 1521 terms), and it gives us a polynomial with the coefficients $a_{2i+1}$ as unknowns or variables.

Using known linear programming methods, we can minimize the integral or polynomial in question subject to the restrictions indicated above, giving specific coefficients as a result.

For example, after applying the calculation method written above, the following coefficients were obtained, which comply perfectly with the standards of harmonics for use, taking a conduction angle of 0.33276 radians:

$\{a_3 \rightarrow$ -0.1875, $a_5 \rightarrow$ -0.0999992, $a_7 \rightarrow$ -0.0599984, $a_9 \rightarrow$ 0.0135112,
$a_{11} \rightarrow$ 0.0199984, $a_{13} \rightarrow$ 0.0199994, $a_{15} \rightarrow$ 0.0199989,
$a_{17} \rightarrow$ -0.00419614, $a_{19} \rightarrow$ -0.0199971, $a_{21} \rightarrow$ -0.0199939,
$a_{23} \rightarrow$ 0.00113734, $a_{25} \rightarrow$ 0.0199809, $a_{27} \rightarrow$ 0.0195771,
$a_{29} \rightarrow$ -0.0135648, $a_{31} \rightarrow$ -0.0199785, $a_{33} \rightarrow$ 0.00300555,
$a_{35} \rightarrow$ 0.019999, $a_{37} \rightarrow$ -0.0128253, $a_{39} \rightarrow$ 0.00219696\}

The power source described, then, represents an innovative structure of structural and constituent characteristics that were unknown till now for the purpose for which it is intended, for which reasons, along with its practical utility, it provides sufficient grounds to obtain the requested exclusivity privilege.

## DESCRIPTION OF THE DRAWINGS

To complement the description provided and in order to assist in the comprehension of the characteristics of the invention, the present specification is accompanied by a set of drawings, as an integral part thereof, in which the following has been represented by way of illustrative and non-limiting character:

Figure number 1.-Shows a block diagram of the set of elements that comprises the power source, object of the invention, in a preferred embodiment thereof, showing the layout of said elements.

Figure number 2.- Shows a block diagram of the input unit provided in the source of the invention, showing the layout of its elements.

Figure number 3.- Shows a block diagram of the power regulator unit and the output unit of LEDs, showing the layout of the constituent elements.

Figure number 4.-Shows a diagram of the PLC modem included in the source according to the invention, showing the layout of the elements of which is comprised.

Figure number 5.-Shows a diagram of the detection of the Q-Resonant point (quasi-resonant) of the power source object of the invention, by means its own CPU microprocessor.

Figure number 6.-Shows a diagram of the transmission of the PLC modem.

Figure number 7.- Shows a diagram of the calculation of the output current and correction of harmonics.

## PREFERRED EMBODIMENT OF THE INVENTION

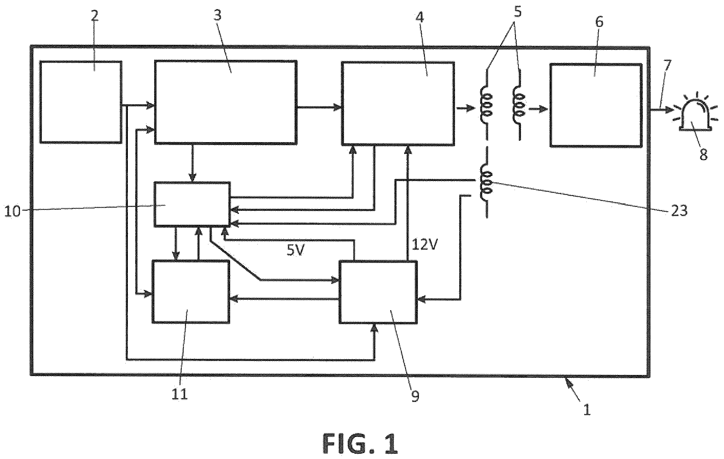

In view of the aforementioned figures, and according to the adopted numbering, a preferred but not limiting embodiment of the intelligent power source can be observed, capable of communication through the powerline.
With reference to the diagram in figure 1, it is observed that the source (1) in question is characterized in that it incorporates, integrated in a single compact assembly, in addition to the input unit (3) and the power regulator (4) (which is the regulator or stage of the source responsible for handling high voltages and/or currents), a CPU microprocessor (10) and a PLC power line communication modem (11), said PLC modem (11) being connected to the input unit (3) which enables, upon detecting the zero crossing, communication with no noise on the network, for which said CPU microprocessor (10) is programmed to detect the quasi-resonant Q-R point and the input voltage zero crossing, as well as to calculate the output current combined with the correction of harmonics, determining that the source communicates with other sources at the time there is less noise on the network, and in turn stopping the generation of noise produced by the source itself.
More specifically, in said diagram in figure 1, it is observed that the source (1) in question consists of an electronic device which, integrated into the aforementioned compact assembly, includes as known elements:

-    the input unit (3), connected after varistors as a protective element (2) to which the alternating current (230 V) line is connected,
-    the power regulator (4) which, as was previously indicated, constitutes the stage of the source that regulates the voltages and currents,
-    and the output unit (6) to which is connected the power supply line (7) of the LEDs (8) of the lighting to be electrically supplied, power transformers (5) being inserted between said output unit (6) and the power regulator (4);

and in an innovative manner:

-    a CPU microprocessor (10) and a PLC (powerline communication) modem (11) through which the start-up, power, synchronization, temperature, voltage and other functions of the source (1) are controlled, the power regulator (4), preferably also having an auxiliary source (9), being connected to the input unit (3).

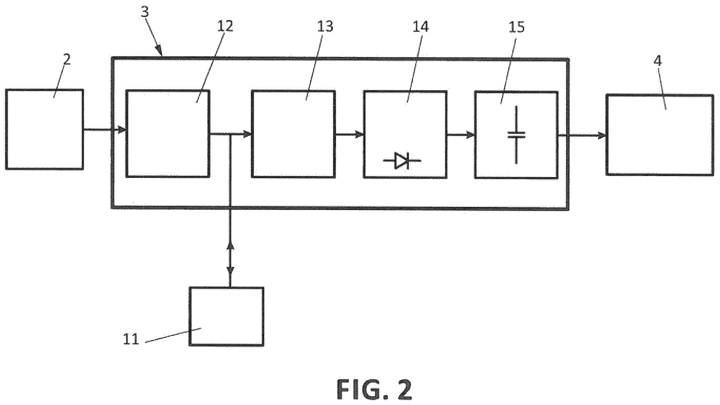

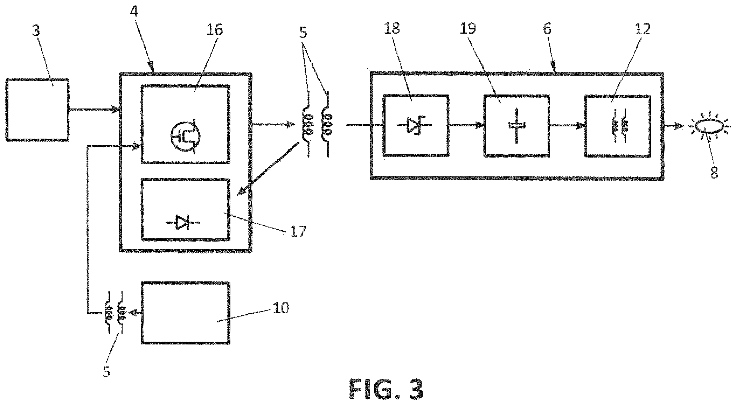

Figure 2 shows in greater detail how the input unit (3), after the protection element (2), includes an electromagnetic interference EMI filter (12), after which the line is connected to the PLC modem (11), followed by a PFC (power factor controller) harmonics filter (13), followed by a bridge diode (14) and a capacitor (15) before its connection to the power regulator (4).
With reference to figure 3 where the elements of the power regulator and the output to LEDs are detailed, it can be seen how, after the input unit (3), the power regulator (4) of the source incorporates transistors (16) which, with the transformer (5) interposed, connects with the CPU microprocessor (10), and recovery diodes (17), also interposing power transformers (5), connected to the output unit (6), a rectifier (18), after which an LCS filter is installed (19) (resonating circuit formed by an inductance coil with value L and a capacitor with capacitance C placed in series) and an electromagnetic interference (EMI) filter (12) is installed, and said filter is connected to the LEDs (8).
The most important characteristic of the power regulator in order to be able to attack [sic] LED diodes is that it should be a source of current and not voltage, and consequently must ensure that it functions in the so-called discontinuous "flyback" mode of power converters. For this purpose, the microprocessor will perform the appropriate calculations that make it work in that zone, and more specifically at the point in that zone in which the performance is at a maximum, the so-called Q-R or quasi-resonant point.

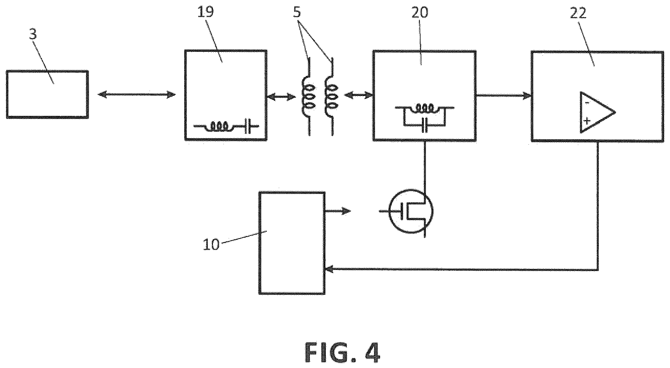

Figure 4 shows how in the PLC modem (11), after the input unit (3), includes an LCS filter (19), transformer (5), an LCP filter (20) (resonant circuit formed by an inductance coil of value L and a capacitor with capacitance C placed in parallel) which connects to the CPU microprocessor (10) and an operational filter (22) which directly connects with the CPU microprocessor (10).

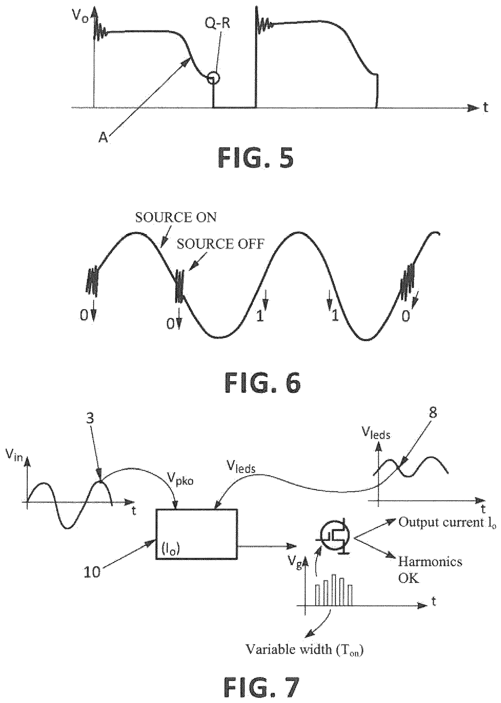

In regards to figure 5, a diagram is observed of the detection of the Q-Resonant point (quasi-resonant) of the proposed power source (1), by means of the CPU microprocessor itself (10). To do this, the microprocessor detects point A at which the coil of the secondary power auxiliary (Figure 1, coil 23) crosses zero volts and adds to it the corresponding time at 90° of the sine wave (1/4 of the period) which is spontaneously formed when the secondary of the transformer (5) in Figure 1 has discharged all of the energy into the LEDs and reconnects the transistors at that point, called Q-R, where the losses in the transistor are minimal because of the lower voltage, and consequently the energy (1/2 C $v^2$) to be dissipated from the parasitic capacitor of the transistors is lower. An important novelty of this design is how said Q-R point is detected without thereby blocking all of the function of the microprocessor, and it consists of so doing from time to time because said Q-R point is moved very little.

The Q-Resonant point is the point of maximum performance for a switched power source. The other known sources, when they do so, do not do it with the CPU but rather with a specific dedicated integrated circuit. The fact that it is done with the CPU itself simplifies the circuit and reduces costs, size, consumption, better performance, etc.

For its part, Figure 6 shows a diagram of the transmission or PLC modem (11), where it is observed how the source is shut off at zero crossings.

The microprocessor controls the source as well as a transistor, a transformer and a circuit, with which it detects when the input voltage crosses zero and shuts off the source for an instant in order to emit pulses at the zero crossings of the input alternating voltage, also enabling the source to communicate with other sources, since at that time there is no noise on the network and all of the sources are shut off momentarily.

There are other devices that utilize communication at the moment of zero crossing of the network voltage. The novelty of the system proposed here is that, given that the PLC communication system and the source are integrated, we are able to shut off the activity of the power source during the zero crossings in order to transmit/receive the information pulses without noise being generated by the sources, which greatly improves the communications of the system assembly.

Finally, figure 7 shows a diagram of the calculation of the output current and harmonics correction. In this design, the average output current to the LEDs is calculated from the peak value of the input voltage, measured directly from the input unit (3) and from the average value of the voltage at the LEDs (8), which is reflected in the power regulator by the auxiliary secondary of the power transformer (Figure 1, coil 23). In this way, different values of the average output current to the LEDs can be chosen without the need to be measuring it directly, thus saving costs. In order to be able to comply with the standards of harmonic content of the current consumed by the source, one quadrant of the input wave is divided into various points (8 in this example), in which the requested instantaneous current is modulated so that the result of the calculation of the waveform corresponds to the previously stated calculation relative to the "function of relative harmonics."

Thus, once the shape of the current we need is determined by the function $f(\theta)$ explained in the previous paragraphs, we have to make the power regulator to generate that current by means of some mechanism.

To do so, we see that the instantaneous current that the power generator consumes at low frequency effects is the average of the current in various switching periods, and as is widely known in the technology, its value is

$$i_{instantaneous} = \frac{1/2\, ton \frac{vi\, ton}{L}}{T}$$ or, in the case of having reached the quasi-resonant point, at which

$$T = ton\left(1 + \frac{vi}{n\, Vo}\right),\quad i_{instantaneous} = \frac{ton\, vi}{2L(1+\frac{vi}{n Vo})} = \frac{ton\, Vp\, sen(\theta)}{2L\left(1+\frac{Vp\, sen(\theta)}{n\, Vo}\right)}$$ where $T$ is the repetition period, $ton$ is the connection time of the transistors, $vi = Vp\, sen(\theta)$ is the instantaneous input voltage as a function of the peak voltage $Vp$, $L$ is the self-inductance of the primary of the transformer, $n$ is the transformation ratio and $Vo$ is the average output voltage (the LEDs (8)).

Said instantaneous current must be equal to a constant $I_o$, yet to be determined, multiplied by the standardized current as a function of the angle $\theta = \omega t$, $f(\theta)$, i.e. $i_{instantaneous} = I_o f(\theta)$. In order to determine the constant $I_o$, we calculate the input power:

$$P = \frac{\int_0^\pi vi\, i_{instantaneous}\, d\theta}{\pi} = \frac{\int_0^\pi Vp\, sen(\theta)I_o f(\theta)d\theta}{\pi} = \frac{Vp\, I_o}{\pi}\int_0^\pi sen(\theta)f(\theta)d\theta =$$

$$\frac{Vp\, I_o}{\pi}\int_0^\pi sen(\theta)\left(sen(\theta) + \sum_{i=1}^{19} a_{2i+1} sen((2i+1)\theta)\right)d\theta = \frac{Vp\, I_o}{\pi}\frac{\pi}{2} = \frac{Vp\, I_o}{2} \Rightarrow I_o = \frac{2P}{Vp} = \frac{2Vo I_{sal}}{Vp},$$

$I_{sal}$ being the output current of the LEDs (8).

Combining the preceding equations, (see figure 7), we can resolve the connection time (*ton*) of the transistors based on the required current of the LEDs ($I_{sal}$), of the peak voltage of the input *Vp* (3) and of the average voltage of the LEDs *Vo* (8):

$$ton = 4LI_{sal}f(\theta)Vo\frac{(1 + \frac{Vp\,sen(\theta)}{n\,Vo})}{Vp^2 sen(\theta)}$$

The CPU (10) will be responsible for generating this variable connection time width of the transistors to ensure that the output current is the proper one and that the harmonics have the correct values.

Finally, it should also be noted that, as has already been mentioned in previous paragraphs, the CPU microprocessor (10) has a non-volatile memory that enables it to remember the on-time duration from the previous day and to make the necessary calculations to change the luminosity for each of up to 8 time intervals based on an extended dual level function, storing the definition of the time intervals in the CPU memory; and that the PLC modem (11) enables these parameters to be modified through powerline communication.

Moreover, the CPU microprocessor (10), by means of incorporated ADC (analog to digital) converters, enables measuring of the input voltage and activating the compatibility mode with a flux reducer present in the installation, reducing, from the 170 V input, the output current applied to the LEDs (8) proportionate to the input voltage.

The nature of the present invention having been sufficiently described along with the way to implement it, it is not considered necessary to provide a more extensive explanation in order for a person skilled in the art to understand its scope and the advantages deriving therefrom, it being noted that in its essence, it may be implemented in other embodiments that differ in detail from the one indicated by way of example, and for which protection is also extended provided its fundamental principle is not altered, changed or modified.

**Claims**

1. INTELLIGENT POWER SOURCE, CAPABLE OF DIGITAL COMMUNICATION VIA THE POWER LINE which, suitable for powering LED diodes (8) of luminaries, and formed by an electronic device having an input unit (3) connected to the alternating current line (230 V), a power regulator (4), power transformers (5) and an output unit (6) to which the power supply line (7) of the LEDs (8) is connected, **characterized in that** it comprises, integrated in a compact assembly, and connected to the input unit (3) and to the power regulator (4), a CPU microprocessor (10) and a PLC powerline communication modem (11), being used to control the startup, power, synchronization, temperature, voltage and other functions of the source (1) as well as protection, communications with other sources and storage of parameters and data; **in that** it further comprises fast diodes or bridge diodes (14) that enabled the source to be shut off when a high voltage pulse arrives, varistors as a protective element (2) that protect the source from voltage peaks of up to 4 kV, transistors (16) and power diodes (17) controlled by the CPU microprocessor (10) as well as at least one high-frequency transformer (5); **and in that** said CPU microprocessor (10) is programmed to detect the Q-R quasi-resonant point and the zero crossing of the input voltage, as well as to calculate the output current combined with the harmonics correction, determining that the source communicates with other sources at the time of least noise on the network, and in turn, stopping the generation of noise produced by the source itself.

2. INTELLIGENT POWER SOURCE, CAPABLE OF DIGITAL COMMUNICATION VIA THE POWER LINE, according to claim 1, **characterized in that** it incorporates an auxiliary power source (9), integrated in the first or main one, which makes it possible to turn off the illumination of the LEDs, but to maintain the functions of communications and retransmission of data for other sources.

3. INTELLIGENT POWER SOURCE, CAPABLE OF DIGITAL COMMUNICATION VIA THE POWER LINE, according to claims 1 or 2, **characterized in that** it comprises an NTC resistance that measures the temperature of the source and an input to measure the temperature of the LEDs.

4. INTELLIGENT POWER SOURCE, CAPABLE OF DIGITAL COMMUNICATION VIA THE POWER LINE, according to any one of claims 1 to 3, **characterized in that** it has an input and a connected external pushbutton, which enables its current to be turned off or varied in an autonomous and programmable fashion.

5. INTELLIGENT POWER SOURCE, CAPABLE OF DIGITAL COMMUNICATION VIA THE POWER LINE, according to any one of claims 1 to 4, **characterized in that** the CPU microprocessor (10) has a non-volatile memory to remember the on-time duration of the previous day and to make calculations to change the luminosity for each of up to 8 intervals of time based on an extended dual level function, storing the definition of the time intervals in the CPU memory.

6.  INTELLIGENT POWER SOURCE, CAPABLE OF DIGITAL COMMUNICATION VIA THE POWER LINE according to any one of claims 1 to 5, **characterized in that** the CPU microprocessor (10) incorporates ADC (analog to digital) converters to perform a measurement of the input voltage and activate the compatibility mode with a flux reducer present in the installation, reducing, from the 170 V input, the output current applied to the LEDs (8) in proportion to the input voltage.

FIG. 1

FIG. 2

FIG. 3

FIG. 4

FIG. 5

FIG. 6

FIG. 7

13

# EP 3 145 282 A1

<table>
<tr><td colspan="2" align="center">**INTERNATIONAL SEARCH REPORT**</td><td>International application No.<br>PCT/ES2015/070247</td></tr>
</table>

**A. CLASSIFICATION OF SUBJECT MATTER**

*H05B41/14* (2006.01)
*H02M7/02* (2006.01)
According to International Patent Classification (IPC) or to both national classification and IPC

**B. FIELDS SEARCHED**

Minimum documentation searched (classification system followed by classification symbols)
H05B, H02M

Documentation searched other than minimum documentation to the extent that such documents are included in the fields searched

Electronic data base consulted during the international search (name of data base and, where practicable, search terms used)

EPODOC, INVENES

**C. DOCUMENTS CONSIDERED TO BE RELEVANT**

| Category* | Citation of document, with indication, where appropriate, of the relevant passages | Relevant to claim No. |
|---|---|---|
| Y | US 2013162157 A1 (SUZUKI MASATAKA ET AL.) 27/06/2013, paragraph [0036]; claims 1-9. | 1-6 |
| Y | US 2011187275 A1 (GILTACA ROD M ET AL.) 04/08/2011, paragraphs[0003 - 0004]. | 1-6 |

☐ Further documents are listed in the continuation of Box C.    ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | "&" document member of the same patent family |

| Date of the actual completion of the international search<br>06/07/2015 | Date of mailing of the international search report<br>**(07/07/2015)** |
|---|---|
| Name and mailing address of the ISA/<br><br>OFICINA ESPAÑOLA DE PATENTES Y MARCAS<br>Paseo de la Castellana, 75 - 28071 Madrid (España)<br>Facsimile No.: 91 349 53 04 | Authorized officer<br>M. Argüeso Montero<br><br>Telephone No. 91 3493273 |

Form PCT/ISA/210 (second sheet) (July 2009)

## INTERNATIONAL SEARCH REPORT

Information on patent family members

| International application No. |
| --- |
| PCT/ES2015/070247 |

| Patent document cited in the search report | Publication date | Patent family member(s) | Publication date |
| --- | --- | --- | --- |
| US2011187275 A1 | 04.08.2011 | CL2012002074 A1 | 30.11.2012 |
| | | MX2012008892 A | 29.08.2013 |
| | | JP2013534063 A | 29.08.2013 |
| | | CA2825379 A1 | 11.08.2011 |
| | | KR20130004280 A | 09.01.2013 |
| | | CN102860133 A | 02.01.2013 |
| | | AU2010345320 A1 | 20.09.2012 |
| | | WO2011094837 A1 | 11.08.2011 |
| | | WO2011094837 A8 | 07.09.2012 |
| | | EP2532213 A1 | 12.12.2012 |
| | | EP2532213 A4 | 23.07.2014 |
| US2013162157 A1 | 27.06.2013 | JP2013135509 A | 08.07.2013 |
| | | US8729813 B2 | 20.05.2014 |

Form PCT/ISA/210 (patent family annex) (July 2009)